(19) **Europäisches Patentamt / European Patent Office / Office européen des brevets**

(11) **EP 3 767 520 B1**

(12) # EUROPEAN PATENT SPECIFICATION

(45) Date of publication and mention of the grant of the patent:
**07.02.2024 Bulletin 2024/06**

(21) Application number: **18889968.6**

(22) Date of filing: **05.11.2018**

(51) International Patent Classification (IPC):
**G06V 10/28** (2022.01)    **G06V 10/44** (2022.01)
**G06V 40/18** (2022.01)

(52) Cooperative Patent Classification (CPC):
**G06V 40/18; G06V 10/28; G06V 10/457**

(86) International application number:
**PCT/CN2018/113989**

(87) International publication number:
**WO 2019/174276 (19.09.2019 Gazette 2019/38)**

(54) **METHOD, DEVICE, EQUIPMENT AND MEDIUM FOR LOCATING CENTER OF TARGET OBJECT REGION**

VERFAHREN, VORRICHTUNG, AUSRÜSTUNG UND MEDIUM ZUM ORTEN DER MITTE EINES ZIELOBJEKTBEREICHS

PROCÉDÉ, DISPOSITIF, ÉQUIPEMENT ET SUPPORT POUR LOCALISER LE CENTRE D'UNE RÉGION D'OBJET CIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2018 CN 201810208514**

(43) Date of publication of application:
**20.01.2021 Bulletin 2021/03**

(73) Proprietors:
- **BOE TECHNOLOGY GROUP CO., LTD.**
  **Beijing 100015 (CN)**
- **Beijing BOE Optoelectronics Technology Co., Ltd.**
  **Beijing 100176 (CN)**

(72) Inventors:
- **CHU, Minglei**
  **Beijing 100176 (CN)**
- **ZHANG, Hao**
  **Beijing 100176 (CN)**
- **CHEN, Lili**
  **Beijing 100176 (CN)**
- **LIN, Lin**
  **Beijing 100176 (CN)**
- **XUE, Hongzhen**
  **Beijing 100176 (CN)**
- **SUN, Jiankang**
  **Beijing 100176 (CN)**
- **YAN, Guixin**
  **Beijing 100176 (CN)**

(74) Representative: **Brötz, Helmut et al**
**Rieder & Partner mbB**
**Patentanwälte - Rechtsanwalt**
**Yale-Allee 26**
**42329 Wuppertal (DE)**

(56) References cited:
**CN-A- 103 440 481**    **CN-A- 103 729 632**

- **JAVADI AMIR-HOMAYOUN ET AL: "SET: a pupil detection method using sinusoidal approximation", FRONTIERS IN NEUROENGINEERING, vol. 8, 9 April 2015 (2015-04-09), pages 1-10, XP055857292, DOI: 10.3389/fneng.2015.00004**
- **WOLFGANG FUHL ET AL: "ElSe", EYE TRACKING RESEARCH & APPLICATIONS, ACM, 2 PENN PLAZA, SUITE 701 NEW YORK NY 10121-0701 USA, 14 March 2016 (2016-03-14), pages 123-130, XP058079713, DOI: 10.1145/2857491.2857505 ISBN: 978-1-4503-4125-7**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- YU, Luo: "Research on Exact Location Algorithm of Pupil Center Based on Ellipse Fitting", Chinese Journal of Medical Instrumentation, vol. 41, no. 3, 1 January 2017 (2017-01-01), pages 170-174, XP055638585, ISSN: 1671-7104, DOI: 10.3969/j.issn.1671-7104.2017.03.004
- HUANG, Jun: "An Improved Pupil Center Location Algorithm", Computer Knowledge and Technology, vol. 13, no. 22, 15 September 2017 (2017-09-15), pages 193-195, XP009517711, ISSN: 1009-3044

## Description

CROSS-REFERENCE TO RELATED APPLICATION

The present application claims the priority of a Chinese patent application No. 201810208514.4 filed on March 14, 2018.

TECHNICAL FIELD

The present disclosure relates to an image processing method, apparatus, device and medium for locating a center of a target object region.

BACKGROUND

Tracking (such as eyeball tracking) for a region of interest is an important technique in a virtual reality or augmented reality (VR/AR) application. For example, more possible interactive modes can be provided for a user by eyeball tracking. Therefore, a technology for locating a region of interest which can realize simply and effectively is needed. JAVADI AMIR-HOMAYOUN ET AL: "SET: a pupil detection method using sinusoidal approximation" discloses a pupil detection method comprising the following steps: 1. Thresholding; 2. Segmentation; 3. Border Extraction using Convex Hüll method; 4. Decomposition of each segment into sinusoidal components; and 5. Selection of the segment with the best fit.

SUMMARY

There is provided in an embodiment of the present disclosure an image processing method for locating a center of a target object region, comprising: acquiring a binary image including the target object region; extracting a boundary line of the target object region from the binary image by utilizing a four connected region algorithm in which: for each pixel in the binary image having a pixel value which is the preset pixel value, in case that there is a pixel having a pixel value which is not the preset pixel value in a four connected region of the pixel, the pixel is determined as a boundary point forming the boundary line, wherein the four connected region of the pixel includes pixels adjacent to the pixel in directions of up, down, left, and right, wherein the boundary line includes a plurality of boundary points; selecting one pixel having a pixel value which is a preset pixel value from the plurality of boundary points as a first initiation point pixel; determining a first connected region by adopting an octuple connected region algorithm, wherein the starting point of the first connected region is the first initiation point pixel, and storing coordinates of respective boundary points of the first connected region in a first boundary matrix, wherein the octuple connected region for each pixel includes pixels adjacent to the pixel in directions of up, down, left, right, top left, bottom left, top right, bottom right, and the octuple connected region algorithm comprises: among respective pixels within the octuple connected region of the pixel, looking up clockwise or counterclockwise by taking one of the respective pixels as a starting point, and determining a first looked-up pixel having a pixel value which is the preset pixel value as the boundary point of the connected region; determining whether there are other pixels having pixel values which are the preset pixel value in the plurality of boundary points besides the respective boundary points of the first connected region; in case that there are other pixels having pixel values which are the preset pixel value, selecting one of the other pixels having pixel values of the preset pixel value as a second initiation point, determining a second connected region by adopting the octuple connected region algorithm, wherein a starting point of the second connected region is the second initiation point pixel, and storing coordinates of respective boundary points of the second connected region in a second boundary matrix, determining a number M of boundary points included in the first connected region, and determining a number N of boundary points included in the second connected region, where M and N are positive integers; comparing M and N, and determining one of the first connected region and the second connected region that includes a greater number of boundary points as a target connected region; in case that there are no other pixel having a pixel value which is the preset pixel value, determining the first connected region as the target connected region; and; performing a fitting algorithm on the boundary line of the target connected region, determining a coordinate of the center of the target connected region according to a fitted boundary line of the target connected region, and determining the center of the target connected region as the center of the target object region, or determining an average value of abscissa values of the left-most boundary point and the right-most boundary point in the target connected region as an abscissa value of the center of the target object region, and determining an average value of ordinate values of the top-most boundary point and the bottom-most boundary point in the target connected region as an ordinate value of the center of the target object region.

According to some embodiments of the present disclosure, the image processing method further comprises allocating a storage region of the boundary line based on the boundary line: determining a left-most boundary point and a right-most boundary point of the boundary line based on the boundary line, determining a maximum horizontal length of the boundary line according to the left-most boundary point and the right-most boundary point; determining a top-most boundary point and a bottom-most boundary point of the boundary line based on the boundary line, determining a maximum vertical length of the boundary line according to the top-most boundary point and the bottom-most boundary point; calculating the storage region of the boundary line based on the maximum horizontal length and the maximum vertical length.

According to some embodiments of the present disclosure, the method further comprises: acquiring an input image before acquiring the binary image including the target object region; and acquiring the binary image including the target object region further comprises: determining a pixel value threshold, wherein the pixel value threshold is used to distinguish the target object region and a background region included in the input image; and performing binarization process on pixel values of respective pixels of the input image according to the pixel value threshold, to obtain the binary image of the target object region.

According to some embodiments of the present disclosure, the process of acquiring the binary image further comprises at least one of following process: performing at least one of grayscale conversion, brightness adjustment, and filtering process on the input image; and performing an open operation on the input image on which binarization process has been performed.

There is further provided in some embodiments of the present disclosure an image apparatus for locating a center of the target object region, comprising: a binarization module, configured to acquire a binary image including the target object region; an extraction module, configured to extract a boundary line of the target object region from the binary image by utilizing a four connected region algorithm in which: for each pixel in the binary image having a pixel value which is the preset pixel value, in case that there is a pixel having a pixel value which is not the preset pixel value in a four connected region of the pixel, the pixel is determined as a boundary point forming the boundary line, wherein the four connected region of the pixel includes pixels adjacent to the pixel in directions of up, down, left, and right, wherein the boundary line includes a plurality of boundary points; a connected region determination module, configured to: select one pixel having a pixel value which is a preset pixel value from the plurality of boundary points as a first initiation point pixel; determine a first connected region by adopting an octuple connected region algorithm, wherein the starting point of the first connected region is the first initiation point pixel, and storing coordinates of respective boundary points of the first connected region in a first boundary matrix; determine whether there are other pixels having pixel values which are the preset pixel value in the plurality of boundary points besides the respective boundary points of the first connected region; in case that there are other pixels having pixel values which are the preset pixel value, selecting one of the other pixels having pixel values of the preset pixel value as a second initiation point, determine a second connected region by adopting the octuple connected region algorithm, wherein a starting point of the second connected region is the second initiation point pixel, and storing coordinates of respective boundary points of the second connected region in a second boundary matrix, wherein the octuple connected region for each pixel includes pixels adjacent to the pixel in directions of up, down, left, right, top left, bottom left, top right, bottom right, and the octuple connected region algorithm comprises: among respective pixels within the octuple connected region of the pixel, looking up clockwise or counterclockwise by taking one of the respective pixels as a starting point, and determining a first looked-up pixel having a pixel value which is the preset pixel value as the boundary point of the connected region; determine a number M of boundary points included in the first connected region, and determining a number N of boundary points included in the second connected region, where M and N are positive integers; compare M and N, and determining one of the first connected region and the second connected region that includes a greater number of boundary points as a target connected region; in case that there are no other pixel having a pixel value which is the preset pixel value, determine the first connected region as the target connected region; and a center localization module, configured to perform a fitting algorithm on the boundary line of the target connected region, determine a coordinate of the center of the target connected region according to a fitted boundary line of the target connected region, and determine the center of the target connected region as the center of the target object region, or determine an average value of abscissa values of the left-most boundary point and the right-most boundary point in the target connected region as an abscissa value of the center of the target object region, and determine an average value of ordinate values of the top-most boundary point and the bottom-most boundary point in the target connected region as an ordinate value of the center of the target object region.

According to some embodiments of the present disclosure, the image processing apparatus for locating a center of a target object region further comprises a storage region allocation module, configured to allocate a storage region of the boundary line based on the boundary line.

BRIEF DESCRIPTION OF THE DRAWINGS

Fig.1 shows a flowchart of a method for locating a center of a target object region according to some embodiments of the present disclosure;

Fig.2 shows a schematic diagram of extracting a boundary line by adopting a four connected region algorithm according to some embodiments of the present disclosure;

Fig.3 shows a flowchart of determining a connected region based on a boundary line according to some embodiments of the present disclosure;

Fig.4 shows a schematic diagram of determining a first initiation point according to some embodiments of the present disclosure;

Fig.5A shows an example of a boundary diagram according to some embodiments of the present disclosure;

Fig.5B shows a schematic diagram of an octuple connected template according to some embodiments of the present disclosure;

Fig.6 shows a schematic diagram of determining a connected region according to some embodiments of the present disclosure;

Figs.7A and 7B shows schematic diagrams of determining a second initiation point according to some embodiments of the present disclosure;

Fig.8 shows a flowchart of allocating a storage region of a boundary line based on the boundary line according to some embodiments of the present disclosure;

Fig.9A shows a flowchart of performing binary process on an input image;

Fig.9B shows a schematic diagram of performing preprocess on an input image according to some embodiments of the present disclosure;

Fig.10 shows a schematic diagram of an apparatus for locating a center of a target object region according to some embodiments of the present disclosure.

## DETAILED DESCRIPTION

Technical solutions in embodiments of the present disclosure will be described below clearly and completely by combining with accompanying figures in the embodiments of the present disclosure. Obviously, the embodiments described below are just a part of embodiments of the present disclosure, but not all the embodiments. Based on the embodiments in the present disclosure, all the other embodiments obtained by those ordinary skilled in the art without paying any inventive labor belong to the scope sought for protection in the present disclosure.

There is provided in some embodiments of the present disclosure a method for locating a center of a target object region. The center of the target object can be determined by calculating a connected region of a binary image. This method has an advantage of small amount of data storage. Furthermore, in the method provided in the present disclosure, a storage regions required in the process of calculation can be allocated, so as to become suitable for a hardware implementation.

The method for locating the center of the target object region is applicable to technologies of localization of pupil center and eyeball tracking and so on. The localization of pupil center is a key process of the eyeball tracking technology, and in a product applying the technology of eyeball tracking, hardware implementation of localization of pupil center is also particularly important. For example, in applications such as virtual reality or enhancement reality and so on, eyeball tracking can function as an important technical measure for interacting with the user. For example, in a process of using a virtual reality product by the user, the line-of-sight of the user is determined and tracked by obtaining a image of the user face and identifying an eyeball region, and locating the center of the eyeball, so as to make a corresponding response. Accurate eyeball tracking is capable of providing better user experience for the user. For example, the user can use his/her eyes to control a display content of a display.

Additionally, the eyeball tracking technology can also be applicable to other fields. In a physiological experiment, whether one person is lying can be monitored based on a change in pupil of the person; in the aspect of advertisement effect monitoring, preference of the person can be determined according to the movement of point of regard of eyes; in the aspect of human-machine interaction, the eyes can take the place of keyboard, cursor mouse and touch screen, for example, some mobile phones can pause the video playback when eyes of the person leave away.

The method for locating the center of the target object region is capable of satisfying the requirement for hardware implementation. The requirement for data storage is relatively low, and is easy to be implemented. The method for locating the center of the target object region provided in the present disclosure will be described in the following text by taking pupils of a person as an example. However, those skilled in the art can understand that the target object region may be any region of interest depending on different actual application scenarios.

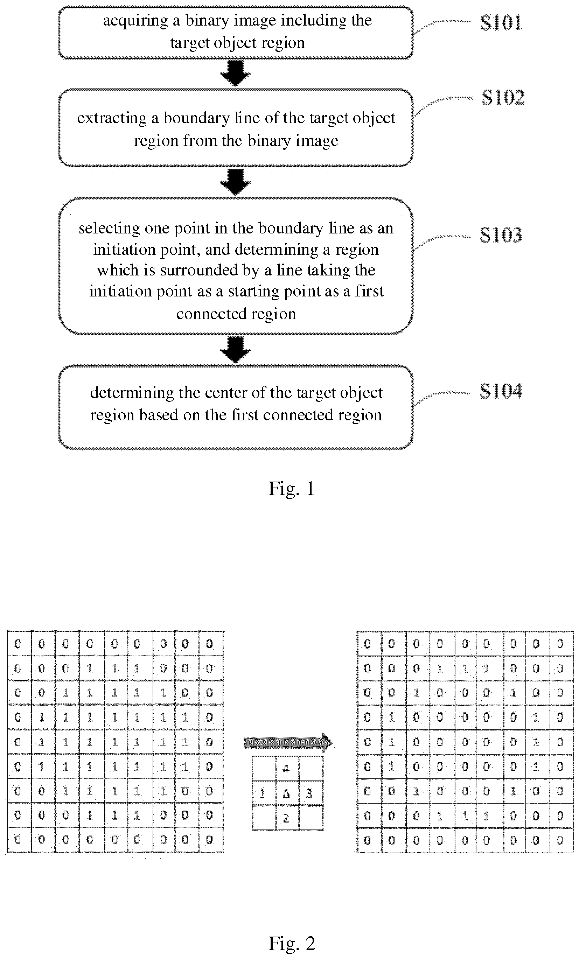

Fig.1 shows a flowchart of a method for locating a center of a target object region according to some embodiments of the present disclosure. Firstly, in step S101, a binary image including the target object region can be acquired by performing a series of preprocess on an acquired image. The preprocess can comprise steps of binarization process etc. Tthe steps of preprocess will be introduced in detail in the following text. Herein, in the binary image, for example, pixel values of pixels included in the target object region for which the center is to be determined can be set as a first grayscale value, for example, 1, and pixel values of other pixels can be set as a second grayscale value, for example, 0, so that the target object region is separated from the background region in the binary image for extracting the boundary line. Principles of the present disclosure will be explained in the following text by taking the first grayscale value being 1 and the second grayscale value being 0 as an example. Those skilled in the art can understand that the first grayscale value and the second grayscale value can be set as any possible pixel value only if it is capable of distinguishing the target object region and the background region, for example, setting the first grayscale value as 255, and setting the second grayscale value as 0.

Next, in step S102, the boundary line of the target object region is extracted from the binary image acquired in step S101. For example, the boundary line can be extracted by adopting a four connected region algorithm, but extraction of the boundary line is not limited thereto, and the boundary line can also be extracted by adopting other methods. The boundary line is composed of a series of boundary points, and forms an outline of the target object. It may be understood that the boundary line may be a line, or may be a line set composed of a plurality of lines.

Next, in step S103, one point is selected from the boundary line (i.e., the plurality of boundary points) as an initiation point, and a first connected region is determined, wherein a starting point of the first connected region is the initiation point. In the embodiments of the present disclosure, for example, the connected region can be determined by adopting an octuple connected region algorithm, but the method for determining a connected region is not limited thereto, and the connected region can also be determined by adopting other methods. The connected region is a set composed of pixels which are connected to each other and have a same grayscale value. One or more connected regions can be included in the binary image.

Finally, in step S104, a target connected region including the center of the target object region is determined according to the determined first connected region, and the center of the target object region is determined according to the target connected region. In case that the binary image includes one connected region, the center of the connected region can be determined as the center of the target object region. In case that the binary image includes a plurality of connected regions, a center of one connected region of the plurality of connected regions including a maximum amount of boundary points can be determined as the center of the target object region. Thus it can be known that the center of the target object region can be determined through the above steps.

Fig.2 shows a schematic diagram of extracting a boundary line by adopting a four connected region algorithm according to some embodiments of the present disclosure. The process of utilizing the four connected region algorithm to extract the boundary line in the binary image will be introduced in detail by referring to Fig.2.

The left side in Fig.2 is the binary image of the target object region, in which pixels whose pixel values are 1 form the target object region, and pixels whose pixel values are 0 form the background region. The binary image can be obtained by performing an image processing technology for example threshold segmentation on an image including the target object region. For example, when the target object region is pupils, a binary image representing the pupil region can be obtained by calculating, in an image including the pupils, a threshold for the pixel values of respective pixels in the region which the pupils are located, and setting pixel values of pixels whose pixel values are higher than the threshold as 1 and setting a pixel values of other pixels as 0.

In the binary image, for example, the boundary line of the target object region in the binary image can be extracted through the four connected region algorithm. In one image, the four connected region of one pixel refers to pixels in the image which are adjacent to the pixel in directions of up, down, left and right. In Fig.2, the middle image is the four connected template used in the present disclosure, and it shows the four connected region of the pixel $\Delta$.

The four connected region algorithm comprises: looking up a pixel with a pixel value of 1 in the binary image of the target object region, and performing judgment for the pixel whose pixel value is1.

If the pixel whose pixel value is1 is located at the edge of the binary image, it can be determined directly as a boundary point of the target object region, and a pixel value of pixels outside the binary image in the four connected region of the pixel is defined as 0.

As for a pixel whose pixel value is 1 not located at the edge of the binary image, if the four connected region of the pixel comprises a pixel whose pixel value is 0, the pixel can be determined as the boundary point of the target object region. If all pixel values of the four connected region are 1, it is considered that the pixel whose pixel value is 1 is not the boundary point. Optionally, in case that a certain pixel is not the boundary point, its pixel value can be set as 0.

By utilizing the four connected region algorithm provided in the present disclosure, all boundary points of the target object region in the binary image are determined by determining the pixel values of the four connected regions of the pixels. These boundary points form the boundary line of the target object region. An image including the boundary line is called as a boundary diagram, as shown in the right of Fig.2.

In one embodiment of the present disclosure, the boundary diagram including the boundary line can be stored. In other embodiments of the present disclosure, coordinates of boundary points included in the boundary line can be stored directly, for the purpose of being used in the subsequent calculation process.

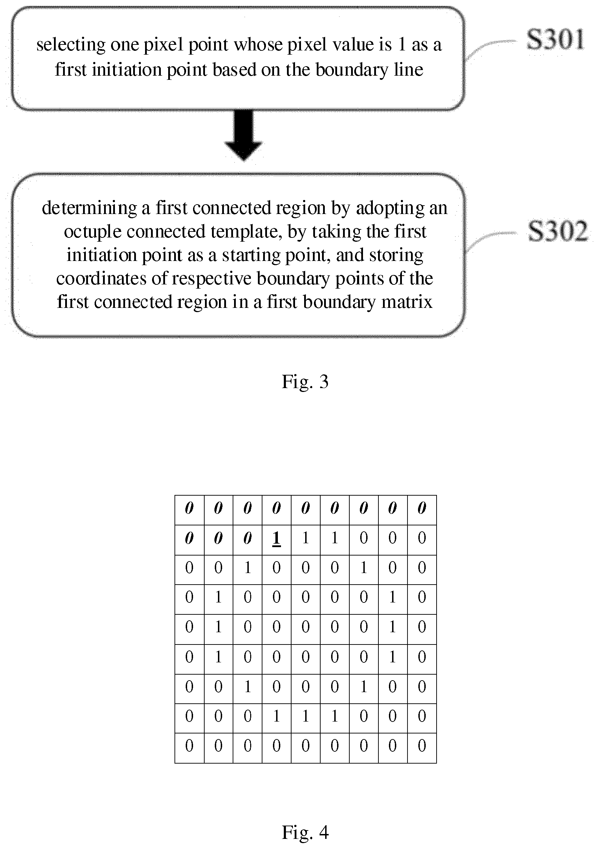

Fig.3 shows a flowchart of determining a connected region based on a boundary line according to some embodiments of the present disclosure. Firstly, in step S301, in the above boundary line extracted by utilizing the four connected region algorithm, one of the boundary points forming the boundary line with a pixel value of 1 (for example, a preset pixel value of 1) is selected as a first initiation point A0. The preset pixel value can be determined according to the requirement combined with the actual situation.

The first initiation point A0 can be used to determine a connected region including the first initiation point A0 and determine whether all the included boundary points have been looked up. A plurality of connected regions included in the boundary diagram can be distinguished by utilizing the method for determining the connected region based on the boundary line as shown in Fig.3. In the boundary diagram including the boundary line, for example, pixels whose pixel values are 1 can be looked up progressively from left to right, and the first looked-up pixel whose pixel value is 1 is determined as the first initiation point A0. For example, Fig.4 shows a schematic diagram of determining the first initiation point A0 in the above manner, in which the italic pixel 0 and pixel 1 represent pixels in the binary image having been looked up, and the underlined pixel "1" is the first looked-up pixel whose pixel value is1. It needs to be noted that in other embodiments of the present disclosure, the first initiation point A0 can also be determined in any other way. For example, the first pixel whose pixel value is 1 can be looked up progressively from right to left, and this first pixel would be determined as the first initiation point A0. This does not form a limitation to the present disclosure, and thus no further details are given herein.

Next, in step S302 of Fig.3, by taking the first initiation point determined in step S301 as a first starting point A0, for example, the first connected region can be determined by adopting the octuple connected region algorithm, and the coordinates of respective boundary points of the first connected region are stored in a first boundary matrix.

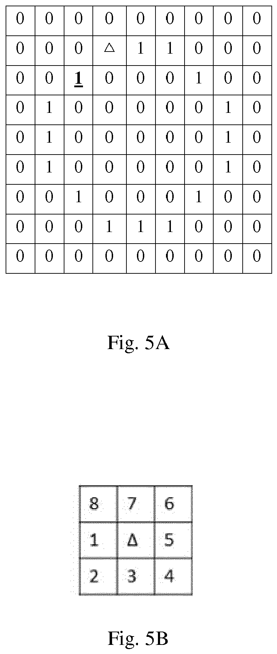

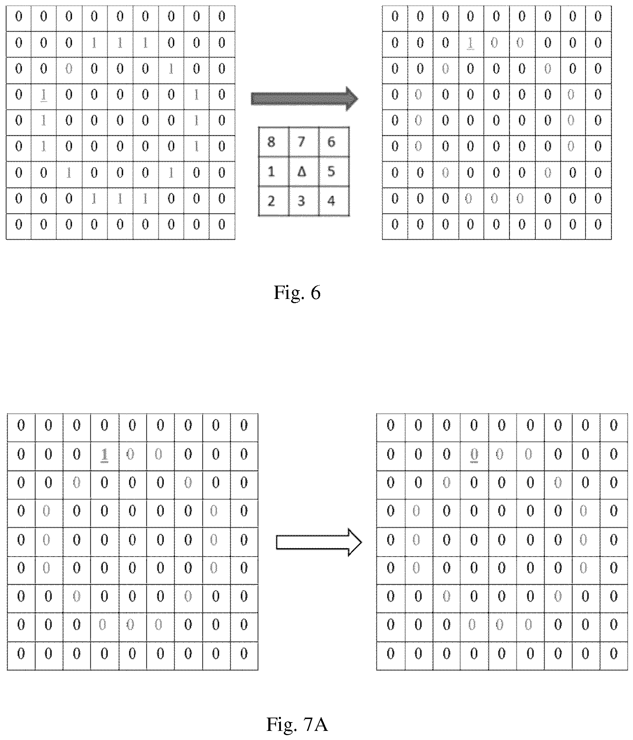

Fig.5A shows an example of a boundary diagram according to some embodiments of the present disclosure. Fig.5B shows a schematic diagram of an octuple connected template according to some embodiments of the present disclosure. Fig.6 shows a schematic diagram of determining a connected region according to some embodiments of the present disclosure. The process of determining the connected region will be introduced in detail by referring to Figs.5A, 5B, and 6.

In one image, the octuple connected region of one pixel includes pixels adjacent to the pixel in directions of up, down, left, right, top-left, bottom-left, top-right, and bottom-right by taking the pixel as a center. The octuple connected region algorithm can include determining the first pixel whose pixel value is 1 as the boundary point of the connected region clockwise or counterclockwise by taking one pixel as the starting point in the octuple connected region of the pixel.

In one embodiment according to the present disclosure, for example, the connected region can be determined by adopting the octuple connected template as shown in Fig.5B. The octuple connected region algorithm can include in the octuple connected region of $\Delta$, looking up the first pixel whose pixel value is 1 in the octuple connected region counterclockwise by taking a pixel adjacent to $\Delta$ in the left as the starting point, and the looked-up pixel is determined as a current boundary point A. In the boundary diagram as shown in Fig.5A, the underlined pixel "1" is the current boundary point A which is looked up by applying the octuple connected template to $\Delta$, and the coordinate (x, y) of the current boundary point A is stored in the first boundary matrix. Optionally, a pixel value of the current boundary point A can be set as 0 in the boundary diagram, which indicates that this pixel has been looked up already; or in case that the coordinate of the boundary point has been stored, the coordinate of the current boundary point can be marked, so as to record that this boundary point has been looked up already.

It needs to be noted that in other embodiments according to the present disclosure, the connected region can also be determined by adopting other octuple connected templates, for example, looking up the first pixel whose pixel value is 1 in the octuple connected region clockwise by taking the pixel adjacent to $\Delta$ in the left as the starting point, or looking up counterclockwise by taking the pixel adjacent to $\Delta$ in the right as the starting point. This mode of looking up does not form a limitation to the present disclosure, and thus no further details are given herein.

Next, a next boundary point A' is looked up by taking the current boundary point A as a center, and applying the octuple connected region algorithm to it, and a coordinate (x', y') of the point A' is stored in the first boundary matrix. The octuple connected template is the same as the octuple connected template used for looing up the current boundary point A. Then, A' is taken as the current boundary point A, and a next boundary point A' is continuously looked up by utilizing the above octuple connected template. The connected region can be determined by looking up a next boundary point A' step by step.

In particular, Fig.6 shows a schematic diagram of determining the connected region, in which the underlined pixel "1" in the left side of a boundary diagram 1 is the next boundary point A' which is looked up by applying the octuple connected template to the current boundary point A. The above steps are repeated until the next looked-up boundary point A' is the first initiation point A0, then it is considered that look-up of all boundary points included in the current connected region is finished, as shown in the right side of a boundary diagram 2 in Fig.6, thus the process of determining the connected region is stopped.

All the boundary points of the connected region can be determined through the step of looking up the next boundary point A' by applying the octuple connected template to the current boundary point A. Optionally, the pixel value of the first initiation point A0 can be set as 0 in the boundary diagram, or in case that the coordinates of the boundary points have been stored already, coordinates of the pixels are marked, so as to confirm that look-up of the boundary points in the first connected region is finished.

Thus it can be known that the connected region including the first initiation point can be determined through the above steps, the connected region can be referred to as a first connected region, and coordinates of boundary points included in the first connected region are stored in the first boundary matrix. In the embodiments of the present disclosure, a storage region can be allocated to the first boundary matrix based on the boundary line, and the process of calculating the storage region will be introduced below in details.

After it is judged that determination of the first connected region is finished, that is, after the next boundary point A' returns back to the first initiation point A0, it can be determined whether there are other pixels whose pixel value are 1 besides the boundary point of the first connected region. In case that there are other pixels whose pixel values are 1, one of the other pixels whose pixel values are 1 is selected as the second initiation point A1.

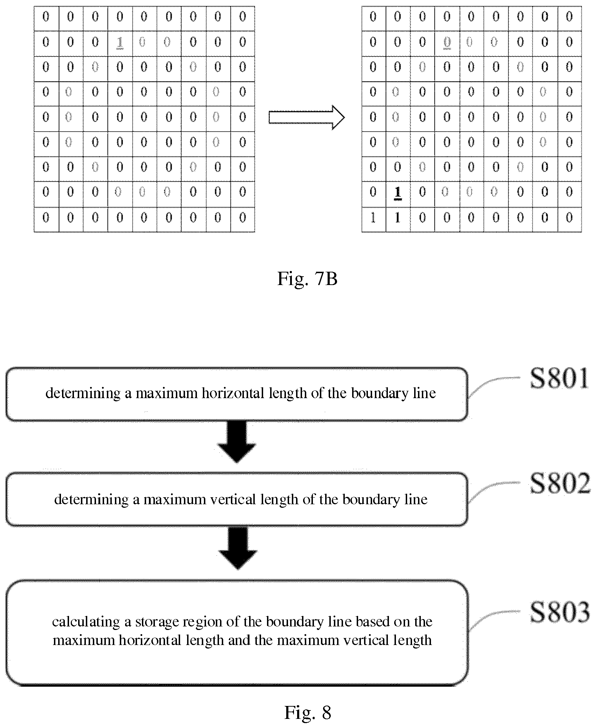

Figs.7A and 7B show schematic diagrams of determining a second initiation point according to some embodiments of the present disclosure. In Figs.7A and 7B, a boundary diagram 1 in the left side is a boundary diagram when the next looked-up boundary point A' is the first initiation point A0 (pixel located in the circle being the first initiation point), that is, determining that look-up of the boundary points of the first connected region is finished. A boundary diagram 2 in the right side is a schematic diagram of determining whether there are other pixels whose pixel values are 1 based in the boundary diagram 1. In case that the second initiation point does not exist, the boundary point of the first connected region can be determined directly as the boundary point of the target object region. The boundary diagram 2 in Fig.7A shows the case when there is no other pixels whose pixel values are 1, for example, in the boundary diagram 2 in Fig.7A, looking up is performed from left to right progressively until a pixel whose pixel value is 1 is still not found in the pixels pointed by the arrow, and then it can be determined that there is no other pixel whose pixel value is 1 in the boundary diagram 2.

The boundary diagram 2 in Fig.7B shows the case when there are other pixels whose pixel values are 1. The other pixels whose pixel values are 1 are pixels other than the boundary points included in the already determined connected region. According to the embodiments of the present disclosure, in the process of determining the first connected region, in case that pixel values of the current boundary point and first initiation point in the first connected region are set as 0, it can be realized that no repetitive boundary point exists in the process of determining other connected regions. Alternately, in the process of determining the first connected region, in case that the coordinates of the boundary points has been stored, since the coordinates of the boundary points in the first connected region are marked, it can also be realized that there is no repetitive boundary point in the process of determining other connected regions.

In other embodiments of the present disclosure, other pixels whose pixel values are 1 can also be looked up in other ways. For example, since the coordinates of the boundary points included in the first connected region are stored in the process of determining the first connected region, it can be determined whether there are other pixels whose pixel values are 1 by determining whether the coordinate of the pixel whose pixel value is 1 is identical with the coordinate included in the first boundary matrix.

In case that there are other pixels whose pixel values are 1, one of the other pixels whose pixel values are 1 is selected as the second initiation point A1. The second initiation point A1 is selected in a way of determining the first initiation point A0. For example, when the process of determining the first initiation point includes looking up the pixel whose pixel value is 1 from left to right progressively, then in the process of selecting the second initiation point, by taking A0 as the starting point and by means of looking up from left to right progressively, the first pixel whose pixel value is 1 is determined as the second initiation point A1. In the boundary diagram 2 of Fig.7B, the pixel located in triangle is determined as the second initiation point. Alternately, when the process of determining the first initiation point includes looking up the first pixel whose pixel value is 1 from right to left progressively, then in the process of selecting the second initiation point, by taking A0 as the starting point and by means of looking up from right to left progressively, the first pixel whose pixel value is 1 is determined as the second initiation point A1.

By taking the second initiation point A1 as the starting point, the second connected region is determined by adopting the octuple connected region algorithm, and coordinates of respective boundary points of the second connected region are stored in a second boundary matrix. The process of determining the second connected region is the same as the process of determining the first connected region, and thus no further details are given herein.

It needs to be noted that the octuple connected template used in the process of determining the second connected region shall be the same as the octuple connected template used in the process of determining the first connected region. In other words, when the octuple connected template used for determining the first connected region includes: in the octuple connected region of $\triangle$, taking the pixel adjacent to $\triangle$ in the left as the starting point, performing look-up for the first pixel whose pixel value is 1 in the octuple connected region in a clockwise way, and determining the first pixel whose pixel value is 1 as the current boundary point A. Then, the octuple connected template used in the process of determining the second connected region shall also be: in the octuple connected region of $\triangle$, taking the pixel adjacent to $\triangle$ in the left as the starting point, looking up for the first pixel whose pixel value is 1 in the octuple connected region in a clockwise way.

Thus it can be known that in the embodiments of the present disclosure, the coordinates of the boundary points included in the first connected region are stored in the first boundary matrix, and the coordinates of the boundary points included in the second connected region are stored in the second boundary matrix. In one embodiment of the present disclosure, for example, a size of the connected region can be determined by calculating the number of the boundary points included in the first connected region and the second connected region. For example, the connected region that includes a greater number of boundary points can be determined as a target connected region (for example, pupil). After the target connected region is determined, the boundary matrix that storing the coordinates of the boundary points included in the target connected region is reserved, and the boundary matrix of other connected regions is cleared up.

In particular, a number M of boundary points included in the first connected region can be determined, and a number N of boundary points included in the second connected region can be determined, where both M and N are positive integers. Id N is greater than M, the second connected region is determined as the target connected region. If N is smaller than M, the first target connected region is determine as the target connected region.

For the purpose of convenient description, the reserved boundary matrix is called as a first boundary matrix, and the cleared-up boundary matrix is called as a second boundary matrix. The cleared-up boundary matrix can be used to store coordinates of other boundary matrixes of other connected regions. In this way, the storage region needed in the process of locating the center of the target object region can be reduced as much as possible, so as to be applicable to hardware implementation.

After the target connected region is determined, it can be determined continuously whether there are other pixels whose pixel values are 1. In case that there are other pixels whose pixel values are 1, one of other pixels whose pixel values are 1 is selected as a third initiation point A2. By taking A2 as a starting point, the third connected region is determined by adopting the octuple connected template, and coordinates of respective boundary points of the third connected region are stored in the second boundary matrix. The above process is the same as the process of determining the second connected region, and thus no further details are given herein. It needs to be noted that the other pixels whose pixel values are 1 are the pixels whose pixel value is 1 other than the boundary points included in the first and second connected regions.

Based on the above steps, all connected regions in the boundary line can be determined, and finally a target connected region having the largest number of boundary points and the first boundary matrix that stores the coordinate of the boundary point of the target connected region are obtained. The boundary points of the target connected region can be considered as the boundary points of the target object region.

The center of the target object region can be determined based on the target connected region. For example, if there are a plurality of connected regions in the boundary diagram, the connected region having the largest number of boundary points is determined as the target connected region, and the center of the target connected region is determined as the center of the target object region; alternatively, if there is only one connected region in the boundary diagram, for example, the center of the connected region is directly considered as the center of the target object region.

In one embodiment of the present disclosure, the first boundary matrix stores the coordinates of the boundary points included in the target connected region. For example, fitting calculation according to the coordinates of the boundary points is performed so as to obtain the center of the first connected region and to be taken as the center of the target object region. For example, if the target object region is pupil, the outline of the boundary points of the target connected region is approximate to an ellipse, and ellipse fitting calculation can be performed on the coordinates of determined boundary points of the target connected region. The center of the ellipse is the center of the target connected region, i.e., the center of the target object region.

In other embodiments of the present disclosure, the center of the target object region can be determined in the following method: taking an average value of abscissa values of a left-most boundary point and a right-most boundary point in the target connected region as an abscissa value of the center of the target object region, and taking an average value of an top-most boundary point and a bottom-most boundary point in the target region as a ordinate value of the center of the target object region.

A maximum value and a minimum value of coordinates x of boundary points stored in the first boundary matrix are calculated, and are marked as X_right and X_left. Also, a maximum value and a minimum value of coordinates y of boundary points stored in the first boundary matrix are calculated, and are marked as Y_bottom and Y_top. Thus it can be known that the bounding box of the target connected region can be represented as:

BoundingBox[0] = X_left; BoundingBox[1] = Y_top;
BoundingBox[2] = X right; BoundingBox[3] = Y_bottom;

If the center of the target object region is calculated in this way, a storage region can be allocated to a bounding box matrix, so as to store values of BoundingBox[0], BoundingBox[1], BoundingBox[2] and BoundingBox[3].

Based on this bounding box matrix, coordinates (X_C, Y_C) of the center point of the target connected region can be determined directly by BoundingBox:

$$X\_C = (\, BoundingBox[0] + BoundingBox[2]\,) \,/\, 2$$

$$Y\_C = (\, BoundingBox[1] + BoundingBox[3]\,) \,/\, 2$$

Thus, it can be known that the method for locating the center of the target object region is capable of simply determining the center of the target object through the connected region calculated based on the boundary line, and in the process of calculation, the storage region required for calculation of the above method can be allocated, and thus it is applicable to the hardware implementation. For example, the boundary line of the binary image of the pupil image is extracted, the first connected region is determined based on the boundary line, and the center of the first connected region is taken as the center of the pupils. In this way, the obtained information on the position of the pupil center can be applicable to a virtual reality product with the eyeball tracking technology.

Fig.8 shows a flowchart of allocating a storage region of a boundary line based on the boundary line according to some embodiments of the present disclosure, wherein the first boundary matrix and the second boundary matrix are stored in the allocated storage region.

In step S801, a left-most boundary point and a right-most boundary point in the boundary line are determined based on the boundary line. For example, a maximum horizontal length of the boundary line can be determined according to the left-most boundary point and the right-most boundary point.

In step S802, a top-most boundary point and a bottom-most boundary point in the boundary line are determined based on the boundary line. For example, a maximum vertical length of the boundary line can be determined according to the top-most boundary point and the bottom-most boundary point.

In step S803, the storage region of the boundary line is calculated based on the maximum horizontal length and the maximum vertical length.

The determined maximum horizontal and vertical length of the boundary line represents the maximum number of pixels included in the boundary line horizontally and vertically. Therefore, the storage region can be allocated based on the maximum number of pixels that are likely included in the boundary line. For example, if the maximum number of pixels included in the boundary line horizontally and vertically are m and n, respectively, then in case of assuming that the connected region is a matrix, the maximum number of boundary points that can be included in the connected region is 2*(m+n), then the first and second boundary matrixes need to store coordinates of 2*2*(m+n) boundary points in all, based on which the storage region can be allocated. In order to avoid the case of the storage region being not enough from occurring because the outline of the connected region is winding, a storage region can be added appropriately on such a basis in the process of allocating the storage region, for example, the storage region can be allocated on a basis of 4*2*(m+n) boundary points.

For example, if the target object region is a pupil, its boundary line is approximate to an ellipse, as shown in the boundary diagram in the right side of Fig.2, and thus the storage region can also be allocated in a way being suitable for an ellipse boundary line. For example, after the horizontal and vertical maximum length of the boundary line is determined, the number of boundary points included in the connected region is determined according to the perimeter formula of the ellipse, and the storage region is allocated on such a basis.

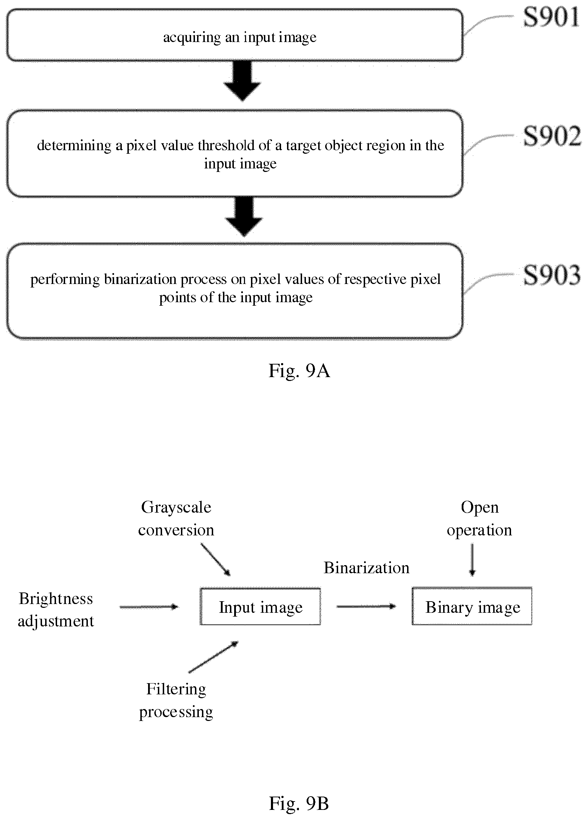

Fig.9A shows a flowchart of performing binarization process on an input image. For example, the binarization processing can comprise following steps.

Before a binary image is acquired, an input image is acquired in step S901, and a target object whose center needs to be determined is included in the input image.

Next, in step S902, a pixel value threshold is determined, wherein the pixel value threshold is used to distinguish the target object region and the background region included in the input image. For example, the threshold of the target object region in gray scale image data can be calculated by using an Otsu's method. The Ostu's method is an adaptive threshold determining method, which is also refered to as a maximum between-class variance method. In other embodiments of the present disclosure, a threshold of the eyeball image can be calculated by adopting other algorithms. For example, the threshold can be determined by making a statistics of an average value of pixel values of the pixels in the target object region.

Next, in step S903, the binarization process is performed on the input image including the target object region based on the determined threshold, so as to separate the target object region from the background region. For example, a pixel value of a pixel in the grayscale image whose pixel value is higher than the threshold can be set as 1, and a pixel value of a pixel whose pixel value is lower than the threshold can be set as 0. It needs to be noted that a pixel value of a pixel whose pixel value is higher than the threshold can also be set as 0, and a pixel value of a pixel whose pixel value is lower than the threshold can also be set as 1. In this way, the binary image of the target object region can be obtained.

Fig.9B shows a schematic diagram of performing pre-possess on the input image according to some embodiments of the present disclosure. For example, the pre-possess can comprise performing at least one of grayscale conversion, brightness adjustment and filtering process on the input image. The steps of the pre-process are not limited to any sequence when being implemented. Those skilled in the art can select one or more of the pre-process steps according to the actual situation, and perform these steps on the input image in an appropriate sequence. In some embodiments, the pre-process can further comprise performing an opening process on the binary image which is obtained after the binarization process is performed.

The input image including the target object region can be obtained through an image acquisition device. For example, in an application of eyeball tracking, an image of eyeball can be obtained by utilizing a device such as a camera, etc., and the camera can obtain a colored image or can obtain a grayscale image, for example, adopting an infrared camera. If the image including the target object region is colored, it can be transformed by grayscale in the process of pre-process the image, and the image would be transformed into a grayscale image.

During the process of acquiring the image, brightness of pixel values of pixels at different positions of the image would become non-uniform due to the impact of factors such as light intensity, angle of light and so on. For example, the case that brightness in a certain region is too high or too low would occur in a photographed eyeball image, and also some image noises would exist. In order to perform the binarization processing of image segmentation by using the threshold on the image more accurately, brightness adjustment and filtering process can be performed in advance on the acquired image. For example, the grayscale value of the too-bright region in the image is correspondingly adjusted, and filtering process such as Gaussian filtering is performed on the image whose brightness has been adjusted, so as to eliminate the noises of image. Thus, a brightness-uniform grayscale image including the target object region can be obtained. On the basis of the grayscale image, the binary image can be obtained by performing the above binarization processing on the grayscale image.

In general, due to the impact of noise, the boundary of the image obtained after binarization process is performed in the image is not smooth. It is likely to have some noise holes in the target object region, and some small noise objects are distributed on the background region. Corrosion process in the image process can separate the sticky target objects, and expansion process can splice the disconnected target objects. Herein, the corrosion process is a process of eliminating the boundary points so that the boundary constricts to the inside, which can be used to remove small and insignificant objects; the expansion processing is a process of merging all background points contacting with the object into the object and making the boundary to expand to the outside, which can be used to fill holes in the object.

Therefore, after the binary image of the target object region is obtained, open operation processing can be performed on the obtained binary image. It comprises an image processing process of first corroding and then expanding, which is used to eliminate small objects, separate the object at a slender point, smoothen a boundary of a larger object while does not change its area evidently. The main function of the open operation is similar to that of corrosion. However, compared with the corrosion operation, the open operation has the advantage of basically maintaining the original size of the target object region unchanged, which is advantageous for accurately extracting the boundary line of the target object region and determining its center.

It needs to be noted that in the embodiments according to the present disclosure, in the process of acquiring the binary image, pre-process steps as shown in Fig.9B can be included partially or in all, and further can comprise other image processing flows.

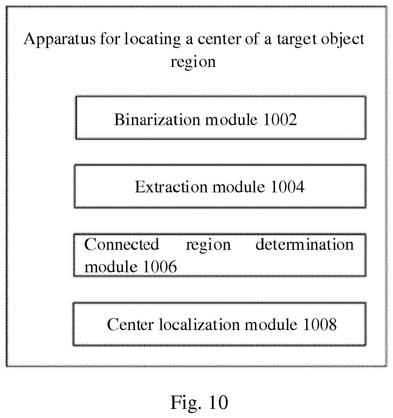

There is further provided in some embodiments of the present disclosure an apparatus for locating a center of a target object region. Fig. 10 shows a schematic diagram of the apparatus for locating the center of the target object region. The apparatus can comprise a binarization module 1002, an extraction module 1004, a connected region determination module 1006, and a center localization module 1008.

The binarization module 1002 is configured to acquire a binary image including the target object region. The extraction module 1004 is configured to extract a boundary line of the target object region from the binary image, wherein the boundary line includes a plurality of boundary points. The connected region determination module 1006 is configured to select one of the plurality of boundary points as an initiation point, and determine a first connected, wherein a starting point of the first connected region is the initiation point. The center localization module 1008 is configured to determine the center of the target object region based on the first connected region.

In one embodiment of the present disclosure, the extraction module can extract a boundary line in the binary image by utilizing the four connected region algorithm. The four connected region algorithm comprises: for each pixel whose pixel value is 1 in the binary image, when there is a pixel whose pixel value is not 1 in the four connected region of the pixel, determining the pixel as a boundary point, the boundary point forming the boundary line.

In one embodiment of the present disclosure, the connected region determination module can select one pixel whose pixel value is 1 from the plurality of boundary points as a first initiation point; and determining the first connected region for example by adopting the octuple connected region algorithm, wherein a starting point of the first connected region is the initiation point, and storing coordinates of respective boundary points of the first connected region in a first boundary matrix.

The connected region determination module is further configured to determine whether there are other pixels whose pixel values are 1, in the plurality of boundary points besides respective boundary points of the first connected region, and in case that there are other pixels whose pixel values are 1, select one of the other points whose pixel value is 1 as a second initiation point, determine a second connected region by adopting an octuple connected region algorithm, wherein the second initiation point is a starting point of the second connected region, and store coordinates of respective boundary points of the second connected region in a second boundary matrix. For example, one of the first connected region and the second connected region that includes a greater number of boundary points is determined as a first connected region.

An octuple connected region of one pixel is pixels adjacent to the pixel in directions of up, down, left, right, top left, bottom left, top right, bottom right. The octuple connected region algorithm comprises in respective pixels within the octuple connected region of the pixel, looking up clockwise or counterclockwise by taking one of the respective pixels as a starting point, and determining a first looked-up pixel whose pixel value is 1 as a boundary point of the connected region.

The apparatus for locating the center of the target object region can further comprise a storage region allocation module configured to allocate the storage region of the boundary line based on the boundary line.

In one embodiment of the present disclosure, the center localization module can perform a fitting algorithm on the boundary line of the target connected region, and determine a coordinate of the center of the target connected region according to a fitted boundary line of the target connected region.

In other embodiments of the present disclosure, the center localization module can further take an average value of abscissa values of a left-most boundary point and a right-most boundary point in the target connected region as an abscissa value of the center of the target object region, and take an average value of vertical axes of an top-most boundary point and a bottom-most boundary point in the target connected region as a vertical axis of the center of the target object region.

The binarization module can determine a pixel value threshold of the target object region in the acquired input image, and perform binarization process on pixel values of respective pixels of the input image according to the pixel value threshold, to obtain the binary image of the target object region.

The binarization module can further perform at least one of following processing: performing grayscale conversion, brightness adjustment and filtering process on the input image; and performing an open operation on the input image on which the binarization process has been performed.

There is provided in the embodiments of the present disclosure a method and apparatus for locating the center of the target object region. The method for locating the center of the target object region comprises: acquiring the binary image including the target object region; extracting the boundary line of the target object region in the binary image, the boundary line including a plurality of boundary points; determining the target connected region in the binary image based on the boundary line; determining the center of the target object region based on the target connected region. The method for locating the center of the target object region can further comprise the processes of allocating the storage region based on the boundary line, and pre-processing the image to acquire the binary image of the target object region. The apparatus for locating the center of the target object region comprises the binarization module, the extraction module, the connected region module and the center localization module. The center of the target object region is determined by calculating the connected region in the binary image of the target object region.

The method and apparatus for locating the center of the target object region is easy to be implemented, needs a relatively small storage space, and is easy to calculate the resources required for hardware realization. It can be applicable to technologies or products such as pupil location and eyeball tracking and so on. In addition, the method and apparatus further store boundary coordinates of boundary points of the connected region which is determined based on the boundary line. The connected region and its coordinates of the boundary points can also be applicable to other calculation processes. For example, the boundary of the connected region is determined so as to realize eye recognition based on the pupil boundary.

There is provided in the present disclosure the method and apparatus for locating the center of the target object region, which determines the boundary line based on the binary image of the target object, calculates the connected region based on the boundary line, and determines the center of the first connected region as the center of the target object region. Its data storage amount is small, and it is easy to be implemented, and is capable of satisfying the requirement for the hardware realization.

Those skilled in the art can understand that respective aspects of the present disclosure can be described and explained through several patentable types or scenarios, comprising combination of any new or usable processes, machines, products or substances, or any new or usable improvement to these processes, machines, products or substances. Correspondingly, respective aspects of the present disclosure may be executed completely by a hardware, or may be executed completely by a software (including a firmware, a resident software, a microcode, etc.), or may be executed by a combination of the hardware and the software. Both the hardware and the software can be referred to as "data block", "module", "engine", "unit", "component" or "system". In addition, respective aspects of the present disclosure may be shown as a computer product located in one or more computer readable media. The computer product comprises computer readable program encoding.

The present disclosure uses specific expressions to describe the embodiments of the present disclosure. For example, "one embodiment", "an embodiment", and/or "some embodiments" means a certain feature, structure or characteristics relating to at least one embodiment of the present disclosure. Therefore, it shall be emphasized and noted that "an embodiment", "one embodiment", or "an alternative embodiment" mentioned for two or more times at different positions of the present specification does not necessarily refer to the same embodiment. In addition, some features, structures or characteristics in one or more embodiments of the present disclosure can be combined appropriately.

Unless otherwise defined, all terms (including technical and scientific terms) used herein have the meanings as the same as those meanings commonly understood by those ordinary skilled in the art. It shall be further understood that those terms such as defined in general dictionaries shall be explained as having meanings consistent with meanings in the context of related technology, but shall not be explained by idealized or formalized meanings, unless otherwise explicitly defined.

**Claims**

1.   An image processing method for locating a center of a target object region, comprising:

acquiring a binary image including the target object region (S101);

extracting a boundary line of the target object region from the binary image by utilizing a four connected region algorithm in which: for each pixel in the binary image having a pixel value which is the preset pixel value, in case that there is a pixel having a pixel value which is not the preset pixel value in a four connected region of the pixel, the pixel is determined as a boundary point forming the boundary line, wherein the four connected region of the pixel includes pixels adjacent to the pixel in directions of up, down, left, and right, wherein the boundary line includes a plurality of boundary points;

selecting one pixel having a pixel value which is a preset pixel value from the plurality of boundary points as a first initiation point pixel (S301);

determining a first connected region by adopting an octuple connected region algorithm, wherein the starting point of the first connected region is the first initiation point pixel, and storing coordinates of respective boundary points of the first connected region in a first boundary matrix (S302), wherein the octuple connected region for each pixel includes pixels adjacent to the pixel in directions of up, down, left, right, top left, bottom left, top right, bottom right, and the octuple connected region algorithm comprises: among respective pixels within the octuple connected region of the pixel, looking up clockwise or counterclockwise by taking one of the respective pixels as a starting point, and determining a first looked-up pixel having a pixel value which is the preset pixel value as the boundary point of the connected region;

determining whether there are other pixels having pixel values which are the preset pixel value in the plurality of boundary points besides the respective boundary points of the first connected region;

in case that there are other pixels having pixel values which are the preset pixel value, selecting one of the other pixels having pixel values of the preset pixel value as a second initiation point, determining a second connected region by adopting the octuple connected region algorithm, wherein a starting point of the second connected region is the second initiation point pixel, and storing coordinates of respective boundary points of the second connected region in a second boundary matrix,

determining a number M of boundary points included in the first connected region, and determining a number N of boundary points included in the second connected region, where M and N are positive integers;

comparing M and N, and determining one of the first connected region and the second connected region that includes a greater number of boundary points as a target connected region;

in case that there are no other pixel having a pixel value which is the preset pixel value, determining the first connected region as the target connected region;

performing a fitting algorithm on the boundary line of the target connected region, determining a coordinate of the center of the target connected region according to a fitted boundary line of the target connected region, and determining the center of the target connected region as the center of the target object region, or determining an average value of abscissa values of the left-most boundary point and the right-most boundary point in the target connected region as an abscissa value of the center of the target object region, and determining an average value of ordinate values of the top-most boundary point and the bottom-most boundary point in the target connected region as an ordinate value of the center of the target object region.

2.   The image processing method according to claim 1, further comprising allocating a storage region of the boundary line based on the boundary line:

determining a left-most boundary point and a right-most boundary point of the boundary line based on the boundary line, determining a maximum horizontal length of the boundary line according to the left-most boundary point and the right-most boundary point (S801);

determining a top-most boundary point and a bottom-most boundary point of the boundary line based on the boundary line, determining a maximum vertical length of the boundary line according to the top-most boundary point and the bottom-most boundary point (S802);

calculating the storage region of the boundary line based on the maximum horizontal length and the maximum vertical length (S803).

3. The image processing method according to any one of claims 1 to 2, wherein the image processing method further comprises:

acquiring an input image before acquiring the binary image including the target object region (S901); and acquiring the binary image including the target object region further comprises:

determining a pixel value threshold, wherein the pixel value threshold is used to distinguish the target object region and a background region included in the input image (S902); and

performing binarization process on pixel values of respective pixels of the input image according to the pixel value threshold, to obtain the binary image of the target object region (S903).

4. The image processing method according to claim 3, wherein the process of acquiring the binary image further comprises at least one of following process:

performing at least one of grayscale conversion, brightness adjustment, and filtering process on the input image; and

performing an open operation on the input image on which binarization process has been performed.

5. An image processing apparatus for locating a center of a target object region, comprising:

a binarization module (1002), configured to acquire a binary image including the target object region;

an extraction module (1004), configured to extract a boundary line of the target object region from the binary image by utilizing a four connected region algorithm in which: for each pixel in the binary image having a pixel value which is the preset pixel value, in case that there is a pixel having a pixel value which is not the preset pixel value in a four connected region of the pixel, the pixel is determined as a boundary point forming the boundary line, wherein the four connected region of the pixel includes pixels adjacent to the pixel in directions of up, down, left, and right, wherein the boundary line includes a plurality of boundary points;

a connected region determination module (1006), configured to:

select one pixel having a pixel value which is a preset pixel value from the plurality of boundary points as a first initiation point pixel;

determine a first connected region by adopting an octuple connected region algorithm, wherein the starting point of the first connected region is the first initiation point pixel, and storing coordinates of respective boundary points of the first connected region in a first boundary matrix;

determine whether there are other pixels having pixel values which are the preset pixel value in the plurality of boundary points besides the respective boundary points of the first connected region;

in case that there are other pixels having pixel values which are the preset pixel value, selecting one of the other pixels having pixel values of the preset pixel value as a second initiation point, determine a second connected region by adopting the octuple connected region algorithm, wherein a starting point of the second connected region is the second initiation point pixel, and storing coordinates of respective boundary points of the second connected region in a second boundary matrix, wherein the octuple connected region for each pixel includes pixels adjacent to the pixel in directions of up, down, left, right, top left, bottom left, top right, bottom right, and the octuple connected region algorithm comprises: among respective pixels within the octuple connected region of the pixel, looking up clockwise or counterclockwise by taking one of the respective pixels as a starting point, and determining a first looked-up pixel having a pixel value which is the preset pixel value as the boundary point of the connected region;

determine a number M of boundary points included in the first connected region, and determining a number N of boundary points included in the second connected region, where M and N are positive integers;

compare M and N, and determining one of the first connected region and the second connected region that includes a greater number of boundary points as a target connected region;

in case that there are no other pixel having a pixel value which is the preset pixel value, determine the first connected region as the target connected region; and

a center localization module (1008), configured to perform a fitting algorithm on the boundary line of the target connected region, determine a coordinate of the center of the target connected region according to a fitted boundary line of the target connected region, and determine the center of the target connected region as the center of the target object region, or determine an average value of abscissa values of the left-most boundary point and the right-most boundary point in the target connected region as an abscissa value of the center of the target object region, and determine an average value of ordinate values of the top-most boundary point and the bottom-most boundary point in the target connected region as an ordinate value of the center of the target object region.

6. The image processing apparatus according to claim 5, further comprising a storage region allocation module, configured to allocate a storage region of the boundary line based on the boundary line.


**Patentansprüche**

1. Bildverarbeitungsverfahren zum Orten einer Mitte eines Zielobjektbereichs, umfassend:

Erfassen eines Binärbildes, das den Zielobjektbereich (S101) enthält;

Extrahieren einer Grenzlinie des Zielobjektbereichs aus dem Binärbild unter Verwendung eines Algorithmus für vierfach verbundene Bereiche, in dem: für jedes Pixel in dem Binärbild mit einem Pixelwert, der der voreingestellte Pixelwert ist, für den Fall, dass es ein Pixel mit einem Pixelwert gibt, der nicht der voreingestellte Pixelwert in einem vierfach verbundenen Bereich des Pixels ist, das Pixel als ein Grenzpunkt bestimmt wird, der die Grenzlinie bildet, wobei der vierfach verbundene Bereich des Pixels Pixel enthält, die dem Pixel in Richtungen nach oben, unten, links und rechts benachbart sind, wobei die Grenzlinie mehrere Grenzpunkte enthält;

Auswählen eines Pixels mit einem Pixelwert, der ein voreingestellter Pixelwert ist, aus den mehreren Grenzpunkten als ein erstes Initiationspunktpixel (S301) ;

Bestimmen eines ersten verbundenen Bereichs durch Annehmen eines Algorithmus für achtfach verbundene Bereiche, wobei der Startpunkt des ersten verbundenen Bereichs das erste Initiationspunktpixel ist, und Speichern von Koordinaten jeweiliger Grenzpunkte des ersten verbundenen Bereichs in einer ersten Grenzmatrix (S302), wobei der achtfach verbundene Bereich für jedes Pixel Pixel enthält, die dem Pixel in Richtungen nach oben, unten, links, rechts, oben links, unten links, oben rechts, unten rechts benachbart sind, und der Algorithmus für achtfach verbundene Bereiche Folgendes umfasst: unter den jeweiligen Pixeln innerhalb des achtfach verbundenen Bereichs des Pixels im Uhrzeigersinn oder gegen den Uhrzeigersinn nachzuschlagen, indem eines der jeweiligen Pixel als Startpunkt genommen wird, und ein erstes nachgeschlagenes Pixel mit einem Pixelwert, der der voreingestellte Pixelwert ist, als den Grenzpunkt des verbundenen Bereichs zu bestimmen;

Bestimmen, ob es unter den mehreren Grenzpunkten neben den jeweiligen Grenzpunkten des ersten verbundenen Bereichs andere Pixel mit Pixelwerten gibt, die der voreingestellte Pixelwert sind;

für den Fall, dass es andere Pixel mit Pixelwerten gibt, die der voreingestellte Pixelwert sind, Auswählen eines der anderen Pixel mit Pixelwerten des voreingestellten Pixelwertes als einen zweiten Initiationspunkt, Bestimmen eines zweiten verbundenen Bereichs durch Annehmen des Algorithmus für achtfach verbundene Bereiche, wobei ein Startpunkt des zweiten verbundenen Bereichs das zweite Initiationspunktpixel ist, und Speichern von Koordinaten jeweiliger Grenzpunkte des zweiten verbundenen Bereichs in einer zweiten Grenzmatrix,

Bestimmen einer Anzahl M von Grenzpunkten, die in dem ersten verbundenen Bereich enthalten sind, und Bestimmen einer Anzahl N von Grenzpunkten, die in dem zweiten verbundenen Bereich enthalten sind, wobei M und N positive ganze Zahlen sind;

Vergleichen von M und N und Bestimmen entweder des ersten verbundenen Bereichs oder des zweiten verbundenen Bereichs, der eine größere Anzahl von Grenzpunkten enthält, als einen mit dem Ziel verbundenen Bereich;

für den Fall, dass es keine anderen Pixel mit einem Pixelwert gibt, der der voreingestellte Pixelwert ist, Bestimmen des ersten verbundenen Bereichs als den mit dem Ziel verbundenen Bereich;

Durchführen eines Anpassungsalgorithmus an der Grenzlinie des mit dem Ziel verbundenen Bereichs, Bestimmen einer Koordinate der Mitte des mit dem Ziel verbundenen Bereichs gemäß einer angepassten Grenzlinie des mit dem Ziel verbundenen Bereichs und Bestimmen der Mitte des mit dem Ziel verbundenen Bereichs als die Mitte des Zielobjektbereichs, oder Bestimmen eines Durchschnittswertes der Abszissenwerte des äußersten linken Grenzpunkts und des äußersten rechten Grenzpunkts in dem mit dem Ziel verbundenen Bereich als Abszissenwert der Mitte des Zielobjektbereichs, und Bestimmen eines Durchschnittswertes der Ordinatenwerte des obersten Grenzpunkts und des untersten Grenzpunkts in dem mit dem Ziel verbundenen Bereich als Ordinatenwert der Mitte des Zielobjektbereichs.

2. Bildverarbeitungsverfahren nach Anspruch 1, ferner umfassend ein Zuweisen eines Speicherbereichs der Grenzlinie auf der Grundlage der Grenzlinie:

Bestimmen eines äußersten linken Grenzpunktes und eines äußersten rechten Grenzpunktes der Grenzlinie auf der Grundlage der Grenzlinie, wobei eine maximale horizontale Länge der Grenzlinie gemäß dem äußersten linken Grenzpunkt und dem äußersten rechten Grenzpunkt bestimmt wird (S801);
Bestimmen eines obersten Grenzpunktes und eines untersten Grenzpunktes der Grenzlinie auf der Grundlage der Grenzlinie, wobei einer maximalen vertikalen Länge der Grenzlinie entsprechend dem obersten Grenzpunkt und dem untersten Grenzpunkt bestimmt wird (S802);
Berechnen des Speicherbereichs der Grenzlinie auf der Grundlage der maximalen horizontalen Länge und der maximalen vertikalen Länge (S803).

3. Bildverarbeitungsverfahren nach einem der Ansprüche 1 bis 2, wobei das Bildverarbeitungsverfahren ferner umfasst:

Erfassen eines Eingangsbildes vor dem Erfassen des Binärbildes, das den Zielobjektbereich enthält (S901); und wobei das Erfassen des Binärbildes, das den Zielobjektbereich enthält, ferner umfasst:

Bestimmen eines Pixelwert-Schwellenwertes, wobei der Pixelwert-Schwellenwert verwendet wird, um den Zielobjektbereich und einen in dem Eingangsbild enthaltenen Hintergrundbereich zu unterscheiden (S902); und
Durchführen eines Binarisierungsprozesses an Pixelwerten jeweiliger Pixel des Eingangsbildes gemäß dem Pixelwert-Schwellenwert, um das Binärbild des Zielobjektbereichs zu erhalten (S903).

4. Bildverarbeitungsverfahren nach Anspruch 3, wobei der Vorgang des Erfassen des Binärbildes ferner mindestens einen der folgenden Vorgänge umfasst:

Durchführen eines Graustufenumwandlungs-, Helligkeitsanpassungs- und/oder Filterungsvorgangs an dem Eingangsbild; und
Durchführen eines Öffnungsvorgangs an dem Eingangsbild, an dem ein Binarisierungsvorgang durchgeführt wurde.

5. Bildverarbeitungsvorrichtung zum Orten einer Mitte eines Zielobjektbereichs, aufweisend:

ein Binarisierungsmodul (1002), das konfiguriert ist, um ein Binärbild zu erfassen, das den Zielobjektbereich enthält;
ein Extraktionsmodul (1004), das konfiguriert ist, um eine Grenzlinie des Zielobjektbereichs aus dem Binärbild unter Verwendung eines Algorithmus für vierfach verbundene Bereiche zu extrahieren, in dem: für jedes Pixel in dem Binärbild mit einem Pixelwert, der der voreingestellte Pixelwert ist, für den Fall, dass es ein Pixel gibt, das einen Pixelwert hat, der nicht der voreingestellte Pixelwert in einem vierfach verbundenen Bereich des Pixels ist, das Pixel als ein Grenzpunkt bestimmt wird, der die Grenzlinie bildet, wobei der vierfach verbundene Bereich des Pixels Pixel enthält, die dem Pixel in den Richtungen nach oben, unten, links und rechts benachbart sind, wobei die Grenzlinie mehrere Grenzpunkte enthält;
ein Modul (1006) zum Bestimmen verbundener Bereiche, das konfiguriert ist, um:

ein Pixel mit einem Pixelwert, der ein voreingestellter Pixelwert ist, aus den mehreren Grenzpunkten als ein erstes Initiationspunktpixel auszuwählen;
einen ersten verbundenen Bereich durch Annehmen eines Algorithmus für achtfach verbundene Bereiche zu bestimmen, wobei der Startpunkt des ersten verbundenen Bereichs das erste Initiationspunktpixel ist, und Speichern von Koordinaten jeweiliger Grenzpunkte des ersten verbundenen Bereichs in einer ersten Grenzmatrix;
zu bestimmen, ob es unter den mehreren Grenzpunkten neben den jeweiligen Grenzpunkten des ersten verbundenen Bereichs andere Pixel mit Pixelwerten gibt, die der voreingestellte Pixelwert sind;

für den Fall, dass es andere Pixel mit Pixelwerten gibt, die der voreingestellte Pixelwert sind, Auswählen eines der anderen Pixel mit Pixelwerten des voreingestellten Pixelwertes als einen zweiten Initiationspunkt, einen zweiten verbundenen Bereich durch Annehmen des Algorithmus für achtfach verbundene Bereiche zu bestimmen, wobei ein Startpunkt des zweiten verbundenen Bereichs das zweite Initiationspunktpixel ist, und Speichern von Koordinaten jeweiliger Grenzpunkte des zweiten verbundenen Bereichs in einer zweiten Grenzmatrix, wobei der achtfach verbundene Bereich für jedes Pixel Pixel enthält, die dem Pixel in Richtungen nach oben, unten, links, rechts, oben links, unten links, oben rechts, unten rechts benachbart sind, und der Algorithmus für achtfach verbundene Bereiche Folgendes umfasst: unter den jeweiligen Pixeln innerhalb des achtfach verbundenen Bereichs des Pixels im Uhrzeigersinn oder gegen den Uhrzeigersinn nachzuschlagen, indem eines der jeweiligen Pixel als Startpunkt genommen wird, und ein erstes nachgeschlagenes Pixel mit einem Pixelwert, der der voreingestellte Pixelwert ist, als den Grenzpunkt des verbundenen Bereichs zu bestimmen;

eine Anzahl M von Grenzpunkten, die in dem ersten verbundenen Bereich enthalten sind, zu bestimmen und Bestimmen einer Anzahl N von Grenzpunkten, die in dem zweiten verbundenen Bereich enthalten sind, wobei M und N positive ganze Zahlen sind;

M und N zu vergleichen und Bestimmen entweder des ersten verbundenen Bereichs oder des zweiten verbundenen Bereichs, der eine größere Anzahl von Grenzpunkten enthält, als einen mit dem Ziel verbundenen Bereich;

für den Fall, dass es keine anderen Pixel mit einem Pixelwert gibt, der dem voreingestellten Pixelwert entspricht, den ersten verbundenen Bereich als den mit dem Ziel verbundenen Bereich zu bestimmen; und ein Mitteortungsmodul (1008), das konfiguriert ist, um einen Anpassungsalgorithmus an der Grenzlinie des mit dem Ziel verbundenen Bereichs durchzuführen, eine Koordinate der Mitte des mit dem Ziel verbundenen Bereichs gemäß einer angepassten Grenzlinie des mit dem Ziel verbundenen Bereichs zu bestimmen und die Mitte des mit dem Ziel verbundenen Bereichs als die Mitte des Zielobjektbereichs zu bestimmen, oder einen Durchschnittswert der Abszissenwerte des äußersten linken Grenzpunkts und des äußersten rechten Grenzpunkts in dem mit dem Ziel verbundenen Bereich als einen Abszissenwert der Mitte des Zielobjektbereichs zu bestimmen, und einen Durchschnittswert von Ordinatenwerten des obersten Grenzpunkts und des äußersten unteren Grenzpunkts in dem mit dem Ziel verbundenen Bereich als einen Ordinatenwert der Mitte des Zielobjektbereichs zu bestimmen.

**6.** Bildverarbeitungsvorrichtung nach Anspruch 5, ferner ein Speicherbereichszuweisungsmodul aufweisend, das konfiguriert ist, um auf der Grundlage der Grenzlinie einen Speicherbereich der Grenzlinie zuzuweisen.

## Revendications

**1.** Procédé de traitement d'image pour localiser un centre d'une région d'objet cible, comprenant :

d'acquérir une image binaire incluant la région d'objet cible (S101) ;

d'extraire une ligne limite de la région d'objet cible à partir de l'image binaire en utilisant un algorithme de région connectée quatre dans lequel : pour chaque pixel dans l'image binaire ayant une valeur de pixel qui est la valeur de pixel pré-réglée, dans le cas où il y a un pixel ayant une valeur de pixel qui n'est pas la valeur de pixel pré-réglée dans une région connectée quatre du pixel, le pixel est déterminé en tant qu'un point limite formant la ligne limite, dans lequel la région connectée quatre du pixel inclut des pixels adjacents au pixel dans les directions haut, bas, gauche et droite, dans lequel la ligne limite inclut une pluralité de points limites ;

de sélectionner un pixel ayant une valeur de pixel qui est une valeur de pixel pré-réglée à partir de la pluralité de points limites en tant qu'un premier pixel de point d'initiation (S301) ;

de déterminer une première région connectée en adoptant un algorithme de région connectée octuple, dans lequel le point de départ de la première région connectée est le premier pixel de point d'initiation, et de stocker des coordonnées de points limites respectifs de la première région connectée dans une première matrice limite (S302), dans lequel la région connectée octuple pour chaque pixel inclut des pixels adjacents au pixel dans les directions haut, bas, gauche, droite, en haut à gauche, en bas à gauche, en haut à droite, en bas à droite, et l'algorithme de région connectée octuple comprend : parmi des pixels respectifs à l'intérieur de la région connectée octuple du pixel, de consulter dans le sens horaire et le sens anti-horaire en prenant un des pixels respectifs en tant qu'un point de départ, et de déterminer un premier pixel consulté ayant une valeur de pixel qui est la valeur de pixel pré-réglée en tant que le point limite de la région connectée ;

de déterminer s'il y a d'autres pixels ayant des valeurs de pixels qui sont la valeur de pixel pré-réglée dans la pluralité de points limites en plus des points limites respectifs de la première région connectée ;

dans le cas où il y a d'autres pixels ayant des valeurs de pixels qui sont la valeur de pixel pré-réglée, de sélectionner un des autres pixels ayant des valeurs de pixels de la valeur de pixels pré-réglée en tant qu'un second point d'initiation, de déterminer une seconde région connectée en adoptant l'algorithme de région connectée octuple, dans lequel un point de départ de la seconde région connectée est le second pixel de point d'initiation, et de stocker des coordonnées de points limites respectifs de la seconde région connectée dans une seconde matrice limite,

de déterminer un nombre M de points limites inclus dans la première région connectée, et de déterminer un nombre N de points limites inclus dans la seconde région connectée, où M et N sont des entiers positifs ;

de comparer M et N, et de déterminer une de la première région connectée et de la seconde région connectée qui inclut un plus grand nombre de points limites en tant qu'une région connectée cible ;

dans le cas où il n'y a pas d'autre pixel ayant une valeur de pixel qui est la valeur de pixel pré-réglée, de déterminer la première région connectée en tant que la région connectée cible ;

d'exécuter un algorithme d'ajustement sur la ligne limite de la région cible connectée, de déterminer une coordonnée du centre de la région cible connectée selon une ligne limite ajustée de la région cible connectée, et de déterminer le centre de la région cible connectée en tant que le centre de la région cible connectée, ou de déterminer une valeur moyenne de valeurs d'abscisse du point limite le plus à gauche et du point limite le plus à droite dans la région cible connectée en tant qu'une valeur d'abscisse du centre de la région d'objet cible, et de déterminer une valeur moyenne de valeurs d'ordonnées du point limite le plus haut et du point limite le plus bas dans la région cible connectée en tant qu'une valeur d'ordonnée du centre de la région d'objet cible.

2.  Procédé de traitement d'image selon la revendication 1, comprenant en outre d'allouer une région de stockage de la ligne limite en se basant sur la ligne limite :

de déterminer un point limite le plus à gauche et un point limite le plus à droite de la ligne limite en se basant sur la ligne limite, de déterminer une longueur horizontale maximale de la ligne limite selon le point limite le plus à gauche et le point limite le plus à droite (S801) ;

de déterminer un point limite le plus haut et un point limite le plus bas de la ligne limite en se basant sur la ligne limite,

de déterminer une longueur verticale maximale de la ligne limite selon le point limite le plus haut et le point limite le plus bas (S802) ;

de calculer la région de stockage de la ligne limite en se basant sur la longueur horizontale maximale et la longueur verticale maximale (S803).

3.  Procédé de traitement d'image selon l'une quelconque des revendications 1 à 2, dans lequel le procédé de traitement d'image comprend en outre :

d'acquérir une image d'entrée avant d'acquérir l'image binaire incluant la région d'objet cible (S901) ; et
d'acquérir l'image binaire incluant la région d'objet cible comprend en outre :

de déterminer un seuil de valeur de pixel, dans lequel le seuil de valeur de pixel est utilisé pour distinguer la région d'objet cible et une région de fond incluse dans l'image d'entrée (S902) ; et
de réaliser le processus de binarisation sur des valeurs de pixels de pixels respectifs de l'image d'entrée selon le seuil de valeur de pixel, pour obtenir l'image binaire de la région d'objet cible (S903).

4.  Procédé de traitement d'image selon la revendication 3, dans lequel le processus d'acquisition de l'image binaire comprend en outre au moins un des processus suivants :

de réaliser au moins un d'une conversion d'échelle de gris, d'un ajustement de brillance et d'un processus de filtrage sur l'image d'entrée ; et
de réaliser une opération ouverte sur l'image d'entrée sur laquelle le processus de binarisation a été exécuté.

5.  Appareil de traitement d'image pour localiser un centre d'une région d'objet cible, comprenant :

un module de binarisation (1002), configuré pour acquérir une image binaire incluant la région d'objet cible ;
un module d'extraction (1004), configuré pour extraire une ligne limite de la région d'objet cible à partir de l'image binaire en utilisant un algorithme de région connectée quatre dans lequel : pour chaque pixel dans l'image binaire ayant une valeur de pixel qui est la valeur de pixel pré-réglée, dans le cas où il y a un pixel ayant une valeur de pixel qui n'est pas la valeur de pixel pré-réglée dans une région connectée quatre du pixel, le pixel est déterminé en tant qu'un point limite formant la ligne limite, dans lequel la région connectée quatre du pixel inclut des pixels adjacents au pixel dans les directions haut, bas, gauche et droite, dans lequel la ligne limite inclut une pluralité de points limites ;

un module de détermination de région connectée (1006), configuré pour :

sélectionner un pixel ayant une valeur de pixel qui est une valeur de pixel pré-réglée à partir de la pluralité de points limites en tant qu'un premier pixel de point d'initiation ;

de déterminer une première région connectée en adoptant un algorithme de région connectée octuple, dans lequel le point de départ de la première région connectée est le premier pixel de point d'initiation, et de stocker des coordonnées de points limites respectifs de la première région connectée dans une première matrice limite,

de déterminer s'il y a d'autres pixels ayant des valeurs de pixels qui sont la valeur de pixel pré-réglée dans la pluralité de points limites en plus des points limites respectifs de la première région connectée ;

dans le cas où il y a d'autres pixels ayant des valeurs de pixels qui sont la valeur de pixel pré-réglée, de sélectionner un des autres pixels ayant des valeurs de pixels de la valeur de pixels pré-réglée en tant qu'un second point d'initiation, de déterminer une seconde région connectée en adoptant l'algorithme de région connectée octuple, dans lequel un point de départ de la seconde région connectée est le second pixel de point d'initiation, et de stocker des coordonnées de points limites respectifs de la seconde région connectée dans une seconde matrice limite, dans lequel la région connectée octuple pour chaque pixel inclut des pixels adjacents au pixel dans les directions haut, bas, gauche, droite, en haut à gauche, en bas à gauche, en haut à droite, en bas à droite, et l'algorithme de région connectée octuple comprend : parmi des pixels respectifs à l'intérieur de la région connectée octuple du pixel, de consulter dans le sens horaire et le sens anti-horaire en prenant un des pixels respectifs en tant qu'un point de départ, et de déterminer un premier pixel consulté ayant une valeur de pixel qui est la valeur de pixel pré-réglée en tant que le point limite de la région connectée ;

de déterminer un nombre M de points limites inclus dans la première région connectée, et de déterminer un nombre N de points limites inclus dans la seconde région connectée, où M et N sont des entiers positifs ;

de comparer M et N, et de déterminer une de la première région connectée et de la seconde région connectée qui inclut un plus grand nombre de points limites en tant qu'une région connectée cible ;

dans le cas où il n'y a pas d'autre pixel ayant une valeur de pixel qui est la valeur de pixel pré-réglée, de déterminer la première région connectée en tant que la région connectée cible ; et

un module de localisation de centre (1008), configuré pour exécuter un algorithme d'ajustement sur la ligne limite de la région cible connectée, de déterminer une coordonnée du centre de la région cible connectée selon une ligne limite ajustée de la région cible connectée, et déterminer le centre de la région cible connectée en tant que le centre de la région cible connectée, ou de déterminer une valeur moyenne de valeurs d'abscisse du point limite le plus à gauche et du point limite le plus à droite dans la région cible connectée en tant qu'une valeur d'abscisse du centre de la région d'objet cible, et de déterminer une valeur moyenne de valeurs d'ordonnées du point limite le plus haut et du point limite le plus bas dans la région cible connectée en tant qu'une valeur d'ordonnée du centre de la région d'objet cible.

6. Appareil de traitement d'image selon la revendication 5, comprenant en outre un module d'allocation de région de stockage, configuré pour allouer une région de stockage de la ligne limite en se basant sur la ligne limite.

acquiring a binary image including the
target object region — S101

extracting a boundary line of the target object
region from the binary image — S102

selecting one point in the boundary line as an
initiation point, and determining a region
which is surrounded by a line taking the
initiation point as a starting point as a first
connected region — S103

determining the center of the target object
region based on the first connected region — S104

Fig. 1

| 0 | 0 | 0 | 0 | 0 | 0 | 0 | 0 | 0 |
|---|---|---|---|---|---|---|---|---|
| 0 | 0 | 0 | 1 | 1 | 1 | 0 | 0 | 0 |
| 0 | 0 | 1 | 1 | 1 | 1 | 1 | 0 | 0 |
| 0 | 1 | 1 | 1 | 1 | 1 | 1 | 1 | 0 |
| 0 | 1 | 1 | 1 | 1 | 1 | 1 | 1 | 0 |
| 0 | 1 | 1 | 1 | 1 | 1 | 1 | 1 | 0 |
| 0 | 0 | 1 | 1 | 1 | 1 | 1 | 0 | 0 |
| 0 | 0 | 0 | 1 | 1 | 1 | 0 | 0 | 0 |
| 0 | 0 | 0 | 0 | 0 | 0 | 0 | 0 | 0 |

|   | 4 |   |
|---|---|---|
| 1 | Δ | 3 |
|   | 2 |   |

| 0 | 0 | 0 | 0 | 0 | 0 | 0 | 0 | 0 |
|---|---|---|---|---|---|---|---|---|
| 0 | 0 | 0 | 1 | 1 | 1 | 0 | 0 | 0 |
| 0 | 0 | 1 | 0 | 0 | 0 | 1 | 0 | 0 |
| 0 | 1 | 0 | 0 | 0 | 0 | 0 | 1 | 0 |
| 0 | 1 | 0 | 0 | 0 | 0 | 0 | 1 | 0 |
| 0 | 1 | 0 | 0 | 0 | 0 | 0 | 1 | 0 |
| 0 | 0 | 1 | 0 | 0 | 0 | 1 | 0 | 0 |
| 0 | 0 | 0 | 1 | 1 | 1 | 0 | 0 | 0 |
| 0 | 0 | 0 | 0 | 0 | 0 | 0 | 0 | 0 |

Fig. 2

selecting one pixel point whose pixel value is 1 as a first initiation point based on the boundary line

S301

determining a first connected region by adopting an octuple connected template, by taking the first initiation point as a starting point, and storing coordinates of respective boundary points of the first connected region in a first boundary matrix

S302

Fig. 3

| 0 | 0 | 0 | 0 | 0 | 0 | 0 | 0 | 0 |
|---|---|---|---|---|---|---|---|---|
| 0 | 0 | 0 | **1** | 1 | 1 | 0 | 0 | 0 |
| 0 | 0 | 1 | 0 | 0 | 0 | 1 | 0 | 0 |
| 0 | 1 | 0 | 0 | 0 | 0 | 0 | 1 | 0 |
| 0 | 1 | 0 | 0 | 0 | 0 | 0 | 1 | 0 |
| 0 | 1 | 0 | 0 | 0 | 0 | 0 | 1 | 0 |
| 0 | 0 | 1 | 0 | 0 | 0 | 1 | 0 | 0 |
| 0 | 0 | 0 | 1 | 1 | 1 | 0 | 0 | 0 |
| 0 | 0 | 0 | 0 | 0 | 0 | 0 | 0 | 0 |

Fig. 4

| 0 | 0 | 0 | 0 | 0 | 0 | 0 | 0 | 0 |
|---|---|---|---|---|---|---|---|---|
| 0 | 0 | 0 | △ | 1 | 1 | 0 | 0 | 0 |
| 0 | 0 | **1** | 0 | 0 | 0 | 1 | 0 | 0 |
| 0 | 1 | 0 | 0 | 0 | 0 | 0 | 1 | 0 |
| 0 | 1 | 0 | 0 | 0 | 0 | 0 | 1 | 0 |
| 0 | 1 | 0 | 0 | 0 | 0 | 0 | 1 | 0 |
| 0 | 0 | 1 | 0 | 0 | 0 | 1 | 0 | 0 |
| 0 | 0 | 0 | 1 | 1 | 1 | 0 | 0 | 0 |
| 0 | 0 | 0 | 0 | 0 | 0 | 0 | 0 | 0 |

Fig. 5A

| 8 | 7 | 6 |
|---|---|---|
| 1 | Δ | 5 |
| 2 | 3 | 4 |

Fig. 5B

| 0 | 0 | 0 | 0 | 0 | 0 | 0 | 0 | 0 |
|---|---|---|---|---|---|---|---|---|
| 0 | 0 | 0 | 1 | 1 | 1 | 0 | 0 | 0 |
| 0 | 0 | 0 | 0 | 0 | 0 | 1 | 0 | 0 |
| 0 | 1 | 0 | 0 | 0 | 0 | 0 | 1 | 0 |
| 0 | 1 | 0 | 0 | 0 | 0 | 0 | 1 | 0 |
| 0 | 1 | 0 | 0 | 0 | 0 | 0 | 1 | 0 |
| 0 | 0 | 1 | 0 | 0 | 0 | 1 | 0 | 0 |
| 0 | 0 | 0 | 1 | 1 | 1 | 0 | 0 | 0 |
| 0 | 0 | 0 | 0 | 0 | 0 | 0 | 0 | 0 |

| 8 | 7 | 6 |
|---|---|---|
| 1 | Δ | 5 |
| 2 | 3 | 4 |

| 0 | 0 | 0 | 0 | 0 | 0 | 0 | 0 | 0 |
|---|---|---|---|---|---|---|---|---|
| 0 | 0 | 0 | 1 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

Fig. 6

| 0 | 0 | 0 | 0 | 0 | 0 | 0 | 0 | 0 |
|---|---|---|---|---|---|---|---|---|
| 0 | 0 | 0 | 1 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

| 0 | 0 | 0 | 0 | 0 | 0 | 0 | 0 | 0 |
|---|---|---|---|---|---|---|---|---|
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

Fig. 7A

| 0 | 0 | 0 | 0 | 0 | 0 | 0 | 0 | 0 |
|---|---|---|---|---|---|---|---|---|
| 0 | 0 | 0 | 1 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |

$\Longrightarrow$

| 0 | 0 | 0 | 0 | 0 | 0 | 0 | 0 | 0 |
|---|---|---|---|---|---|---|---|---|
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 0 | 0 | 0 | 0 | 0 | 0 | 0 | 0 |
| 0 | 1 | 0 | 0 | 0 | 0 | 0 | 0 | 0 |
| 1 | 1 | 0 | 0 | 0 | 0 | 0 | 0 | 0 |

Fig. 7B

determining a maximum horizontal length of the boundary line — S801

determining a maximum vertical length of the boundary line — S802

calculating a storage region of the boundary line based on the maximum horizontal length and the maximum vertical length — S803

Fig. 8

acquiring an input image — S901

determining a pixel value threshold of a target object region in the input image — S902

performing binarization process on pixel values of respective pixel points of the input image — S903

Fig. 9A

Grayscale conversion

Open operation

Brightness adjustment → Input image — Binarization → Binary image

Filtering processing

Fig. 9B

Apparatus for locating a center of a target object region

Binarization module 1002

Extraction module 1004

Connected region determination module 1006

Center localization module 1008

Fig. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810208514